# DEMANDE DE BREVET EUROPEEN

(11) **EP 3 889 839 A1**
(43) Date de publication de la demande: **06.10.2021**
(21) Numéro de dépôt: 20315082.6
(22) Date de dépôt: 31.03.2020
(51) Int. Cl.: G06K 19/077

(54) **PROCÉDÉ DE PERSONNALISATION GRAPHIQUE OPTIMISÉ DE MODULES DE CARTE À PUCE ET MODULE OBTENU**

(71) Demandeur: THALES DIS FRANCE SA, 92190 Meudon (FR)
(72) Inventeur: Degeilh, Line, 13881 Gemenos Cedex (FR); Byrne, David, 13881 Gemenos Cedex (FR)
(74) Mandataire: Milharo, Emilien

(57) **Abrégé**

L'invention concerne un procédé de fabrication d'un module (1) standard de carte à puce présentant des contacts métallisés (P1-P6) définissant un modèle graphique comprenant des portions visibles formées de lignes, segments ou points, dont une première partie (2A, 12A), franchit complètement les contacts métallisés (P1-P6) sur leur épaisseur et dont une seconde partie (2B, 12B) est formée que superficiellement sur la surface externe supérieure des contacts métallisés (P1-P6),
caractérisé en ce que ladite seconde partie (2A, 12A) est réalisée dans la continuité de la première partie, pour former ledit modèle graphique.

## Description

Procédé de personnalisation graphique optimisé de modules de carte à puce et module obtenu.

### Domaine de l'invention.

L'invention concerne un procédé de personnalisation graphique optimisé de modules de carte à puce.

Il concerne, en particulier, un procédé de fabrication d'un module standard de carte à puce présentant des contacts métallisés définissant un modèle composé au moins de lignes, de segments ou de points et dont une première partie des lignes, segments ou points du modèle, franchissent complètement les contacts métallisés et des deuxièmes parties de lignes, segments ou points ne sont formées que sur une partie supérieure de surface des contacts métallisés.

L'invention peut concerner principalement les cartes à puce pour les banques, les télécommunications, l'identité. Le contexte est important à prendre en compte. Jusqu'à présent, les conceptions de modules de carte à puce étaient liées au fabricant de cartes à puce et de modules (Gemalto / Thales DIS, Idemia, G&D ont leur propre conception et aspect général des formes des plages de contact électrique) ou à l'outil ouvert, des années d'amélioration en particulier pour augmenter la fiabilité.

Un module à circuit intégré de carte à puce conforme aux standards ISO 7816 ou 7810 comprend généralement des plages de contact électriques (6 ou 8) disposées sur un substrat isolant. Une puce de circuit intégré est reportée du côté du substrat isolant généralement placé sous le substrat. (Dans certains cas, il est possible d'avoir une construction inverse avec les plages de contact sous un substrat isolant ajouré au niveau des zones de contact électrique obligatoires normalisées ISO 7816 ou 7810).

### Art antérieur.

On connait un brevet ancien de la demanderesse, EP0589732 (B1), décrivant un procédé de marquage laser des modules de carte à puce pour marquer un logo sur la partie noble de la métallisation de surface ou passivation, au-dessus de la couche de cuivre inférieure des plages de contact. Cela permet de ne pas affecter la passivation en totalité et conserver une barrière contre la corrosion.

On connait également un brevet de la demanderesse, EP1073997 (A1, décrivant une personnalisation graphique des modules de cartes à puce notamment avec le personnage « Mickey ». Les plages de contacts comprennent une combinaison subtile de parties métalliques et absence de partie métallique sur le substrat isolant du module de carte à puce, tout en faisant coïncider des lignes de séparation des plages de contact avec des lignes ou contour de la tête de « Mickey ».

On connait des modules personnalisés notamment par la société SPS avec des perforations ou évidements formant des petits motifs ou logos effectués à l'intérieur des contacts métalliques classiques, au-dessus du substrat diélectrique. Chaque module spécifique du fabriquant peut ainsi porter ou afficher un logo d'un client à l'intérieur d'une zone prédéfinie de plage de contact. Les modules du fabricant peuvent différer ainsi d'un client à l'autre uniquement par le logo différent demandé par ou propre à chaque client. Toutefois, le contour des plages de contact et l'aspect général du module du fabricant est conservé d'un client à un autre. Le résultat obtenu de personnalisation graphique est proche de celui du brevet est proche du brevet EP0589732 (B1) à la différence que dans les modules SPS, les lignes peuvent traverser complètement l'épaisseur des métallisations.

La société Apple a introduit à l'automne 2019 sa propre carte bancaire avec un module personnalisé associé, conduisant une nouvelle tendance de personnalisation graphique des modules. Beaucoup de banques veulent maintenant leur propre conception liée à leur marque.
Des contacts centraux disposés à l'intérieur d'une surface de substrat isolant entourant les plages de contact sont connectés à l'aide de vias conducteurs traversant le substrat isolant et reliant des zones d'interconnexion métalliques plaquées de l'autre côté caché du substrat. Une puce est reportée classiquement du côté du substrat isolant opposé aux plages de métallisation et connecte les zones d'interconnexion.

Ce nouveau module est onéreux notamment du fait des métallisations de chaque côté opposé du substrat et des vias conducteurs à travers le substrat.

### Problème technique.

Des solutions actuelles existent avec une gravure totale des plages combinée à des vias conducteurs, mais sont coûteuses, plus complexes. En outre elles conduisent à réduire la dimension des puces de circuit intégré pouvant être comprise dans l'espace dédiée derrière une plage de contact centrale. En outre, ces solutions engendrent plus de contraintes dans la gestion de la fiabilité de tenue mécanique.

Les inventeurs ont détecté que certains designs ou modèle de module comprenant un logo d'entreprise ou une personnalisation graphique, (comme une forme octogonale au centre de plages de contact), ne sont pas possibles aujourd'hui avec la technologie standard de placage d'or avec électrolyse des deux côtés d'un substrat.

Ils ont notamment détecté que certains modèles ne présentent pas de continuité métallique entre les bords et le centre des plages de contacts des modules. La seule solution semblait être celle ci-dessus utilisée pour les modules Apple avec les inconvénients inhérents notamment de coûts.

### Objectif de l'invention.

L'invention a notamment pour objectif de résoudre les inconvénients susvisés.

L'invention propose des conceptions spécifiques difficiles et contraignantes de modules personnalisées de manière plus rentable. Cet objectif doit être atteint, préférablement, en conservant un bon niveau de fiabilité de tenue mécanique à la flexion / torsion du module.

L'invention vise également une solution plus écologique ou éthique notamment avec moins d'or lié aux vias conducteurs.

### Résumé de l'invention.

L'invention propose de réaliser le motif des plages de contact et celui de la personnalisation graphique par une combinaison particulière d'une technologie de gravure en extrême surface (quelques nm), notamment laser, et d'une gravure standard, notamment du cuivre, sur toute l'épaisseur des plages.

A cet effet, l'invention a pour objet un procédé de fabrication d'un module standard de carte à puce présentant des contacts métallisés définissant un modèle graphique comprenant des portions visibles formées de lignes, segments ou points, dont une première partie franchit complètement les contacts métallisés sur leur épaisseur et dont une seconde partie est formée que superficiellement sur la surface externe supérieure des contacts métallisés ; Le procédé est caractérisé en ce que ladite seconde partie est réalisée dans la continuité de la première partie, pour former ledit modèle graphique.

Ainsi, on obtient une personnalisation graphique du module avec une tenue mécanique avantageusement conservée ou améliorée.

La question de la fiabilité de tenue mécanique se pose réellement. Du point de vue d'experts techniques, les lignes droites complètement gravées à l'intérieur du Cuivre (35 nm) introduisent certaines contraintes spécifiques à l'intérieur du module, au-dessus des puces de circuit intégré et des soudures de fils d'interconnexion ou d'interconnections par puce retournée (flip-chip).

Une proposition de l'invention selon un mode préféré est de graver (ou séparer) par processus standard (chimique ou autre) uniquement les plages de contact qui ont vraiment besoin d'être séparées en particulier les principales plages de contact ISO 7816-2.

La métallisation de protection (Nickel, Au, Palladium et/ou autres métaux nobles et/ou alliages) utilisée sur les modules (généralement sur les couches de cuivre) peut être également un processus standard notamment électrochimique. Les vias conducteurs ne sont pas plus nécessaires (ou du moins leur quantité est très limitée notamment à 2). La solution est plus rentable, moins consommatrice d'or, écologique et éthique.

Selon d'autres caractéristiques ou modes préférés :
- La première partie de portions visibles coïncide avec des lignes de séparation des plages de contact et ladite seconde partie s'étend à travers lesdites plages de contacts ou des zones normalisées ;
- La première partie peut être obtenue à l'aide d'un procédé de formation de plages de contacts parmi une technique de gravure électrochimique, de découpe mécanique, de dépôt de métal notamment par plasma (LIFT), de pulvérisation, de jet de matière conductrice ;
- La seconde partie superficielle peut être obtenue à l'aide d'un procédé de marquage superficiel de surface sur la surface supérieure des métallisations, choisi parmi un procédé de gravure au laser, de gravure électrochimique, de jet de particules abrasives, d'impression jet d'encre, de sérigraphique, de marquage additif ou soustractif ;
- Les portions visibles du modèle graphique sont formées de formes géométriques comprenant des lignes, segments, lignes droites ou lignes courbes, cercles, points, pointillés, traits interrompus, surfaces ou zones contrastées dont l'état de surface est distinct de zones adjacentes ;

L'invention a pour objet également le module correspondant au procédé et une carte comportant le module à personnalisation graphique optimisée visuellement et de bonne tenue mécanique à la flexion et/ou torsion.

### Brève description des figures.

- La figure 1 illustre un module conforme à un premier mode de réalisation avec les zones normalisées obligatoires ISO 7816-2, (C1-C7) ;
- La figure 2 illustre une étape de réalisation des lignes, segments de séparation des plages de contact du module de la figure 1;
- La figure 3 illustre des lignes préférentielles de pliage et donc de fragilisation du module de la figure 1;
- La figure 4 illustre une étape de réalisation des lignes, segments de complétant les lignes, segments de la figure précédente;
- La figure 5 illustre le module personnalisé graphiquement fini obtenu selon le premier mode de réalisation et montrant le motif ou logo complet;
- Les figures 6 et 7 illustrent respectivement un second graphisme à réaliser sur le module et son agencement par rapport aux plages de contact ISO 7816-2 ;
- La figure 8 illustre les étapes A-D de réalisation des lignes, segments de séparation des plages de contact du module de la figure 7 combinées avec un marquage superficiel ;
- La figure 9 illustre des étapes d'un procédé de l'invention selon un mode général, possible de l'invention.

### Description.

En préliminaire, les mêmes références d'une figure à l'autre, indiquent des constituants identiques ou similaires.

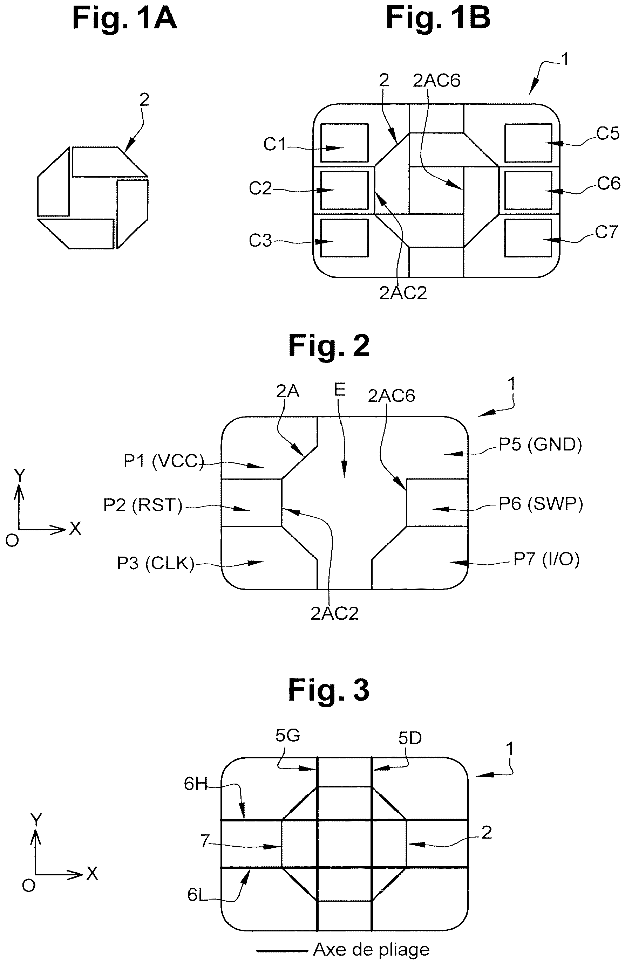

A la figure 1B, est illustré un module personnalisé avec un logo ou marque déposée d'une société (Chase Manhattan Bank) de la figure 1A. Il est conforme à un premier mode de réalisation de l'invention. Il comprend des zones normalisées obligatoires ISO 7816-2, (C1-C7) ;
Conformément à une étape possible de ce mode : La position des zones ISO C1-C7 est à considérer pour la personnalisation graphique de ce module. Ces zones ISO standards sont des zones métalliques intègres à ne pas altérer pour permettre un contact électrique avec un connecteur de lecteur à contact correspondant.

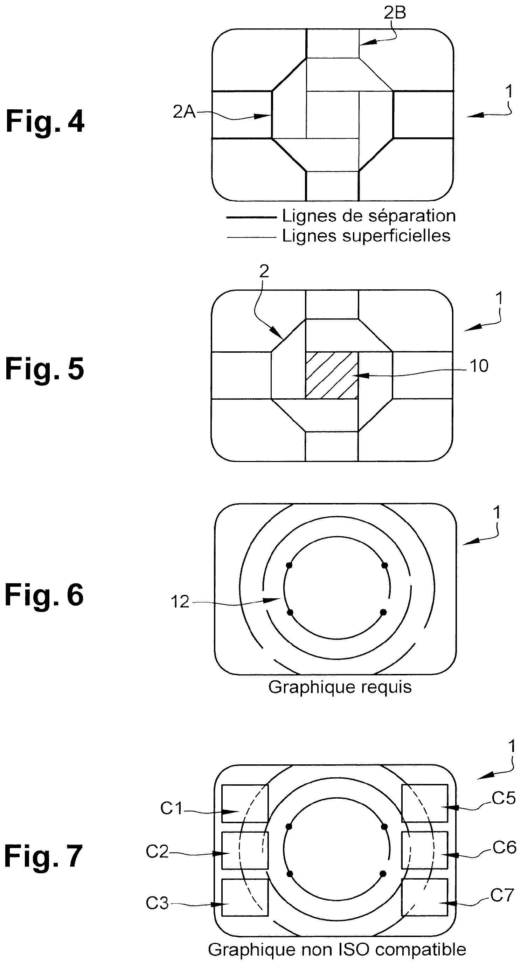

Ces zones C1-C7 doivent s'inscrire ou être comprises les six plages de contacts P1-P7 ; Ces plages doivent être séparées électriquement pour éviter tout court-circuit entre elles. Ici, la conception de la personnalisation est facilitée puisque les zones C1-C7 tombent dans des positions de plages de contacts généralement séparées. Toutefois, toutes les conceptions de personnalisation graphique demandées ne peuvent pas reposer cette règle (cf. notamment la figure 7)

A la figure 2, selon une étape subséquente, les lignes gravées 2A spécifiques nécessaires à la personnalisation sont définies. Les lignes 2A (comprenant 2AC2, 2AC6) correspondent à celles qui doivent être conservées dans une conception classique de gravure (électrochimique, découpe ou autre)

Les avantages techniques sont les suivants :
- L'emplacement E pouvant recevoir la puce de circuit intégrée n'est pas limitée ;
- Les emplacements (non illustrés) des perforations d'interconnexion de la puce à travers un substrat isolant pour interconnecter, (notamment par fil soudé), les plages de contact P1-P7 et les plots de puce est facilement gérable ;
- Seules les lignes 2A peuvent fragiliser la tenue mécanique du module au niveau d'un pliage prédéterminé (5D, 5G, 6H, 6L - figure 3 pour une configuration standard classique) ;
- Pour la fiabilité du module (les lignes de séparation des plages de contact sont brisées autant que possible pour ne pas s'étendre transversalement et longitudinalement (comme les lignes 5D, 5G, 6H, 6L - figure 3) dans la couche métallique du module de manière rectiligne et engendrer une ligne prédéterminée de rupture de la couche métallique des plages de contact), donc les risques de fragilisation sont très réduits ;
- La conception des métallisations P1-P7 est possible, sans via conducteur pour l'interconnexion de la puce électronique et sans recours à des métallisations sur deux faces opposées du substrat isolant, support des métallisations. Une réduction des coûts peut ainsi obtenue ;
- Le placage métallique (ou gravure) standard uniquement sur un côté du substrat isolant portant les contacts externes est possible permettant aussi une réduction des coûts.

A la figure 3, on illustre une analyse des axes de pliure 5D, 5G, 6H, 6L, lors d'essais mécaniques de flexion/ torsion sur des modules gravés complètement sur toute l'épaisseur des métallisations (plages de contact). Il y a un risque important de fiabilité de la tenue mécanique du module lors des tests mécaniques de pliage (flexion / torsion).

A la figure 4, on illustre une étape de réalisation des secondes parties 2B de portions de lignes, segments, points qui complètent ou sont complémentaires des premières parties 2A de portion de lignes, segments, points de la figure 2. La partie de lignes ou segments 2B est réalisé selon une autre étape subséquente, de préférence après un plaquage d'or ou de palladium des plages de contacts P1-P7.

Pour ces secondes parties 2B, le procédé de l'invention peut prévoir de mettre en œuvre un marquage laser avec une longueur d'onde spécifique parmi l'IR, UV, rouge, bleu ou laser vert pour réaliser cette partie de lignes, segments 8 et finaliser la personnalisation graphique du motif 2 de la figure 1B correspondant au logo 2 (fig. 1A).

Ces lignes 2B peuvent être peu profondes de quelques nanomètres seulement par exemple inférieures à 1 nm ou 5 nm voire inférieure à 15 nm). Dans l'exemple, elles sont à environ à 5 nm. Elles peuvent être comprises entre 1 et 15 nm. L'épaisseur minimale d'or sur ce type de modules peut être de 40 nm (l'épaisseur standard peut être de 70 nm avec un max de 110 nm)

De préférence, les lignes 2B superficielles ne traversent pas toute l'épaisseur de la couche de métal précieux (tel que l'Or ou du Palladium) ; Elles n'ont pas d'incidence sur la fiabilité ou tenue mécanique du module final 1 obtenu à la figure 5.

La combinaison de ces deux étapes (réalisations 2A et 2B), comprenant d'une part la séparation 2A des plages de contact P1-P7 et un marquage superficiel 2B est efficace pour obtenir plus aisément une personnalisation graphique du module.
L'invention permet d'obtenir de manière surprenante une apparence du logo sous une forme beaucoup plus large que dans l'art antérieur, tout en étant plus économique et moins exposée à des problèmes de fiabilité mécanique. La zone de réception « E » de la puce électronique peut être plus importante. Cela permet de recevoir des puces nécessitant une assise plus conséquente ou un encombrement maximal sans être gênée par les lignes de séparation 2A situées généralement autour de la puce électronique.

La technologie laser est maintenant capable de graver ces secondes portions superficielles (lignes, segments, points) d'une largeur d'environ 100 nm et avec peu de profondeur nanométriques (quelques nm) avec une bonne précision, résolution et sans dégrader la résistance environnementale (sans brûler la surface ou provoquer une certaine exposition à de la corrosion atmosphérique).

Un autre intérêt du marquage laser 2B illustré figure 5, est le suivant : s'il y a un besoin de zone centrale sombre 10 sur le module, au-dessus de l'emplacement « E » de la puce. Une étude de faisabilité a montré que si la zone sombre 10 est localisée dans le centre du module (et supérieur à la taille de la puce, des défauts apparaissent dans les essais de fiabilité (Test standard de flexion ISO 7610 à trois galets,).

L'intérêt de la combinaison de deux procédés distincts de marquage de lignes 2A, 2B, pour composer un motif graphique 2 est donc démontré.

Les figures 6 et 7 illustrent un autre design ou motif (ou graphique) qui ne peut être réalisé que grâce au procédé de l'invention.

Le dessin ou motif (graphique) 12 de la figure 6 est difficilement voire pas faisable aujourd'hui (non ISO 7816-2 compatible). Il comprend des cercles non interrompus comme contraintes de réalisation du client.
Dans le dessin initial, des zones de contacts P1-P7 normalement séparées sont en court-circuit.
Les plages ISO C1 à C7 ont toutes une partie métallique commune en continuité au niveau de la zone délimitée entre les 2 cercles concentriques les plus extérieurs.
Les zones de contact ne sont donc pas conformes à l'ISO 7816-2 et ce motif 12 serait en principe irrecevable pour tout fabricant dont l'objectif est de réaliser des modules personnalisés de manière optimale (avec les avantages de l'invention).

Or, grâce à de légers ajustements dimensionnels facultatifs le cas échéant, et principalement au recours à l'invention, le motif 12 peut être réalisé grâce à une combinaison de deux procédés de marquage distincts (dont un est une séparation ou isolation électrique totale (ou complète) des plages de contact P1-P7). Il est désormais possible grâce à l'invention, de proposer un design, graphisme ou motif graphique de personnalisation optimisé en respectant la contrainte client imposant des cercles non interrompus. Ici, le marquage au laser superficiel en surface externe des métallisations n'affecte pas l'intégrité des zones obligatoires ISO 7816-2 (C1-C7).

La fiabilité mécanique n'est pas affectée par la réalisation des cercles ou portions de cercles 12A (premières lignes courbées) séparant les plages de contact P1-P7. La fiabilité mécanique n'est pas non plus affectée par les cercles ou portions de cercles complémentaires 12B (secondes lignes courbées) introduits superficiellement sur les métallisations, en prolongeant ou en complétant les cercles ou portions de cercles 12A (premières lignes courbées) appartenant au motif graphique de personnalisation 12 et séparant les plages de contact P1-P7 totalement sur leur épaisseur.

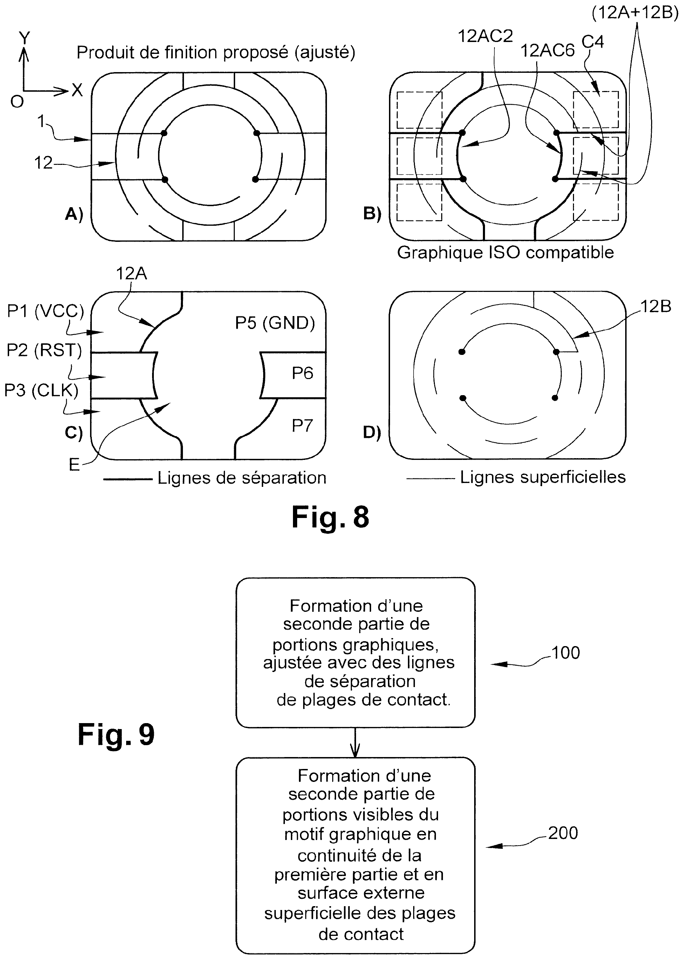

A la figure 9, on décrit maintenant des étapes importantes 100 & 200 du procédé de l'invention selon un mode général possible. Ce mode général couvre les deux modes ou exemples décrits ci-dessus.

Selon une caractéristique préférée du mode général, on décrit un procédé de fabrication d'un module 1 standard de carte à puce présentant des contacts métallisés (P1-P7) qui définissent un modèle graphique 2 ou 12.
Ce modèle 2 ou 12 peut comprendre des portions visibles formées notamment de lignes, segments, points et dont une première partie (2A, 12A) traverse complètement les contacts métallisés (P1-P6) sur leur épaisseur (pour les isoler électriquement les uns des autres) et dont une seconde partie (2B, 12B) est formée que superficiellement par marquage sur la surface externe supérieure des contacts métallisés (P1-P6).
- A l'étape 100 suivant un exemple pour ce mode général préféré, le procédé selon ce mode peut prévoir comme caractéristique une formation d'une première partie de portions visibles d'un motif graphique 2, 12. Cette étape prévoit d'ajuster (ou faire coïncider) cette première partie de portions visibles avec des lignes de séparation 2A, 12A de plages de contact (ou l'inverse : faire coïncider des lignes de séparation passant à proximité de portion de motif avec ces mêmes portions de motif).

L'ajustement peut comprendre une opération d'un agrandissement ou diminution plus ou moins important du motif. Sans changer le motif dans son apparence d'ensemble, les lignes de séparation peuvent être redéfinies ou repositionnées sur les plages du module de manière à coïncider avec des portions de lignes, courbes, points du motif.

Un ajustement dimensionnel (mise au format du module) (facultatif selon le modèle à représenter), peut-être de préférence effectué de manière à avoir un motif le plus grand possible pour une meilleure visibilité. A la figure 1B, le motif 2 est ajusté entre les zones C1-C7.

La portion verticale (selon axe Y) du motif 2 (2AC2) est placée de préférence au plus près de la zone normalisée C2, tandis que la portion verticale (selon axe Y) du motif 2 (2AC6) sur le dessin figure 2, est placée au plus près de la zone C6. Ainsi, notamment les portions 2AC2 et 2AC6 vont pouvoir respectivement coïncider (ou s'ajuster) avec la portion de ligne de séparation 2A séparant la plage de contact P2 de la plage de contact P5 et avec la portion de ligne de séparation 2A séparant de la plage P5 avec la plage P6.

Par contre à la figure 8 (B), le motif 12 est positionné avec qu'une partie seulement placée entre les zones normalisées C2 et C6 (et à leur proximité) tandis qu'une autre partie périphérique complémentaire du motif 12 peut chevaucher ces mêmes zones normalisées C2 et C6.

La portion courbée (12AC2) sensiblement verticale (selon l'axe Y) du motif 12 est placée de préférence ici au plus près de la zone normalisée C2, tandis que la portion courbée (12AC6) sensiblement verticale (selon axe Y) du motif 12 sur le dessin figure 8 (B) est placée au plus près de la zone C6. Ainsi, les portions 12AC2 et 12AC6 du motif 12 vont (pour les besoins du modèle graphique ou graphisme) pouvoir respectivement coïncider ou s'ajuster avec une portion de ligne de séparation courbée 12A, pour l'un séparant la plage de contact P2 de la plage de contact P5 et pour l'autre séparant la plage de contact P5 avec la plage P6.

Les lignes de séparation 12A en coïncidence avec des portions de motif graphique 12 peuvent être aussi déterminées de manière qu'elles ne s'étendent pas rectilignement sur toute la hauteur (selon axe Y) ou largeur (selon axe X) du module, respectivement au niveau des lignes prédéterminées de fragilisation de la tenue mécanique du module 5G, 5D ou 6H, 6L, figure 3.

Ensuite, des portions de motif 12 (ex. cercle intérieur) adjacentes des zones C1-C7 sont mis en coïncidence avec des lignes de séparation 12A (en arc de cercle), ici par exemple la séparation ou isolation électrique à effectuer entre les plages de contact P2 et P5 puis P5 et P6 - figure 8 (C).

La première partie de portions visibles (2A, 12A) coïncide ici figure 2, avec des lignes de séparation des plages de contact. (On verra par la suite que la seconde partie superficielle (2B, 12B) peut s'étendre à travers ou sur lesdites plages de contacts (P1-P6) ou des zones normalisées C1-C7).

La première partie de portion de séparation (2A, 12A) peut être obtenue à l'aide d'un procédé de formation de plages de contacts parmi une technique de gravure électrochimique, de découpe mécanique, de dépôt de métal par plasma, des procédés de dépôt de matière conductrice sur substrat isolant du type FPC « Fine Powder Coating » ou LIFT « Laser Induced Forward Transfer», de divers procédés de pulvérisation, sublimation, d'évaporation sous vide, de jet de matière conductrice. Dans l'exemple, les plages sont séparées préférentiellement par gravure électrochimique.

Selon une caractéristique d'un mode préféré de l'invention, la seconde partie (2B, 12B) est réalisée dans la continuité de la première partie, pour former les modèles graphiques 2 ou 12. Pour illustrer cela, le procédé selon le mode général préféré peut comprendre de préférence l'étape 200 :
- A l'étape 200 suivant l'exemple pour ce mode général, le procédé selon ce mode peut prévoir, comme seconde caractéristique, une étape de formation d'une seconde partie 2B, 12B de portions visibles du motif graphique 2, 12, en continuité de la première partie 2A, 12A et en surface externe des plages de contact. Cette seconde partie 2B ou 12B de portion de motif coïncide avec le reste du motif 2 ou 12 (distinct des premières portions de motif).

Cette étape peut s'appliquer également pour les deux exemples décrits précédemment.

Pour une meilleure visibilité, la formation en continuité 2B, 12B est aussi de préférence effectuée de manière à avoir un motif aussi le plus grand possible s'étendant au-delà des zones normalisées C1-C7 vers le bord périphérique du module. Ainsi, la seconde partie de portions visibles 2B, 12B du motif graphique 2, 12 est formée ou marquée superficiellement sur les plages de contact, en assurant ici une continuité ou prolongement des premières portions 2A, 12A. La seconde partie de portions de lignes, portions de courbes ou points, (voire de surface) ne permet pas de séparer complètement les plages de contact du module sur toute leur épaisseur au niveau de cette seconde partie.

Dans l'exemple, figures 4 et 8 la seconde partie 2B, 12B peut s'étendre à travers ou chevaucher lesdites plages de contacts (P1-P6) ou des zones normalisées C1-C7.
On peut observer que des lignes verticales (selon axe Y) de la seconde partie 2B, 12B peuvent être en prolongement des lignes de séparation 2A, 12A (correspondant à 5D ou 5G - fig. 3) des plages de contact P1-P7 sans pour autant affecter ou fragiliser la tenue mécanique en flexion / torsion du module.

De même, on peut observer que des lignes horizontales (selon l'axe X) de la seconde partie 2B, 12B, peuvent être en prolongement de lignes de séparation 2A, 12A (correspondant à 6H ou 6L - fig. 3) des plages de contact, sans pour autant affecter ou fragiliser la tenue mécanique en flexion / torsion du module.

La seconde partie superficielle (2B, 12B) peut être obtenue à l'aide de différents procédés de marquage superficiel de surface sur la surface supérieure des métallisations, connus de l'homme de l'art.

Ce dernier peut être choisi parmi un procédé de gravure au laser, de gravure électrochimique, de jet de particules abrasives, d'impression jet d'encre, de sérigraphique, de marquage additif ou soustractif. Dans l'exemple, le marquage est effectué par laser ablatif. Sa profondeur peut être de quelques nanomètres notamment 2 à 5 nm, voire compris entre 5 et 15 nm.

Concernant les portions visibles du modèle graphique, ces dernier peuvent être formées, dans tous les exemples, de toutes formes géométriques pouvant comprendre des lignes, des segments, des lignes droites ou des lignes courbes, des cercles, des points, des pointillés, des traits interrompus, des surfaces ou des zones contrastées dont l'état de surface est visiblement distinct de zones adjacentes. Dans l'exemple, le marquage est préférentiellement effectué par laser piloté par des moyens assistés par ordinateur.

Les rainures de séparation d'une certaine largeur des plages de contacts peuvent être remplies d'un isolant d'une couleur quelconque. Pour assurer une continuité des portions 2A, 12A avec 2B, 1B respectivement, un marquage 2B et 12B de la même largeur que 2A, 12A, peut être effectué en continuité sur les métallisations. De préférence, le marquage laser provoque une rainure de faible profondeur (quelques nanomètres) dans une couche de protection noble.
Cette rainure superficielle peut provoquer une différence d'indice de réfraction de la matière superficielle, provoquant une coloration différente de la surface.
Cette rainure peut être colorée par une impression notamment jet d'encre ou de matière isolante ou conductrice. Alternativement, le marquage peut être additif avec un ajout de matière, de préférence conductrice électriquement en surface des plages de contact. Le marquage additif superficiel peut être un dépôt conducteur de quelques nanomètres également.

Ainsi, on obtient un module 1 standard de carte à puce présentant des contacts métallisés P1-P6 définissant un modèle graphique comprenant des portions visibles formées de lignes, segments ou points, dont une première partie 2A, 12A franchit ou sépare complètement les contacts métallisés (P1-P6) sur leur épaisseur de couche et dont une seconde partie (2B, 12B) est formée que superficiellement sur la surface externe supérieure des contacts métallisés (P1-P6) ;
Ce module conforme à un exemple de l'invention peut se caractériser par une seconde partie 2A, 12A qui se trouve disposée dans la continuité ou le prolongement de la première partie, pour former le modèle graphique de personnalisation 2 ou 12.

Au contraire, dans l'art antérieur, notamment certains modules de la société SPS, la personnalisation est nécessairement confinée dans la surface d'une plage de contact généralement au centre de P5.

L'invention a l'avantage de permettre la réception d'une puce de grande assise ou surface dans un emplacement « E » en regard de la plage P5, (fig.2 ou fig.8- C)

Ainsi, l'invention permet d'obtenir, (après encartage ou fixation, dans un corps de carte, d'un des modules personnalisés décrits à tous les exemples), une carte à puce dont le module est personnalisé graphiquement de manière optimisée en dimensions des plus étendues et/ou en tenue mécanique, (sans risque de fragilité mécanique).

## Revendications

1. Procédé de fabrication d'un module (1) standard de carte à puce présentant des contacts métallisés (P1-P6) définissant un modèle graphique comprenant des portions visibles formées de lignes, segments ou points, dont une première partie (2A, 12A) franchit complètement les contacts métallisés (P1-P6) sur leur épaisseur et dont une seconde partie (2B, 12B) est formée que superficiellement sur la surface externe supérieure des contacts métallisés (P1-P6),
**caractérisé en ce que** ladite seconde partie (2A, 12A) est réalisée dans la continuité de la première partie, pour former ledit modèle graphique.

2. Procédé selon la revendication précédente, **caractérisé en ce que** ladite première partie de portions visibles (2A, 12A) coïncide avec des lignes de séparation des plages de contact et ladite seconde partie (2B, 12B) s'étend à travers lesdites plages de contacts (P1-P6) ou des zones normalisées (C1-C7).

3. Procédé selon l'une des revendications précédentes, **caractérisé en ce que** ladite première partie (2A, 12A) est obtenue à l'aide d'un procédé de formation de plages de contacts parmi une technique de gravure électrochimique, de découpe mécanique, de dépôt de métal (LIFI) par plasma, de pulvérisation, de jet de matière conductrice.

4. Procédé selon l'une des revendications précédentes, **caractérisé en ce que** ladite seconde partie superficielle (2B, 12B) est obtenue à l'aide d'un procédé de marquage superficiel de surface sur la surface supérieure des métallisations choisi parmi un procédé de gravure au laser, de gravure électrochimique, de jet de particules abrasives, d'impression jet d'encre, de sérigraphique, de marquage additif ou soustractif.

5. Procédé selon l'une des revendications précédentes, **caractérisé en ce que** lesdites portions visibles du modèle graphique sont formées de formes géométriques comprenant des lignes, segments, lignes droites ou lignes courbes, cercles, points, pointillés, traits interrompus, surfaces ou zones contrastées dont l'état de surface est distinct de zones adjacentes.

6. Module (1) standard de carte à puce présentant des contacts métallisés (P1-P6) définissant un modèle graphique comprenant des portions visibles formées de lignes, segments ou points, dont une première partie (2A, 12A) franchit complètement les contacts métallisés (P1-P6) sur leur épaisseur et dont une seconde partie (2B, 12B) est formée que superficiellement sur la surface externe supérieure des contacts métallisés (P1-P6),
**caractérisé en ce que** ladite seconde partie (2A, 12A) se trouve disposée dans la continuité de la première partie, pour former ledit modèle graphique.

7. Carte à puce comprenant le module selon la revendication précédente.
